Europäisches Patentamt

European Patent Office

Office européen des brevets

(11) Publication number: **0 152 284**
A2

(12) # EUROPEAN PATENT APPLICATION

(21) Application number: 85300840.7

(22) Date of filing: 08.02.85

(51) Int. Cl.⁴: **G 11 B 20/24**
**G 11 B 23/00**

(30) Priority: 08.02.84 GB 8403306

(43) Date of publication of application:
21.08.85 Bulletin 85/34

(84) Designated Contracting States:
BE FR IT SE

(71) Applicant: THE RANK ORGANISATION PLC
6 Connaught Place
London W2 2EZ(GB)

(72) Inventor: Shore, Roger John
42 King George Avenue
Bournemough Dorset(GB)

(74) Representative: Amann, Hannes Gerhart et al,
H.G. Amann and Company 27 Hillersdon Avenue
London, SW13 0EG(GB)

(54) **Noise reduction in optical sound track systems.**

(57) A noise reduction arrangement for use on playback of an optical soundtrack, especially playback of a motion picture soundtrack in a cinema, without regard to any particular technique applied during encoding of the soundtrack, comprises for a left-hand and/or right-hand playback channel, low pass and high pass filter paths each including a non-linear compressor (16, 20, 30 and 34) followed by a linear expander (18, 22, 32 and 36) which, in each path, are effective to maintain substantially at unchanged level signal components above a threshold of about −30 dB and below said threshold to give a progressively increasing expansion for signal components of increasingly low level, so that at very low signal levels below about −60 dB there is an increasing tendency towards noise gate characteristics.

EP 0 152 284 A2

-1-

## Specification

## Noise Reduction in Optical Sound

## Track Systems

This invention relates to a method of noise reduction in optical sound track systems. The method is non-complementary, i.e. it is carried out on playback only without application of any related technique during recording, and accordingly the invention also relates to a non-complementary noise reduction arrangement for handling the playback signal from an optical soundtrack.

The recent growth of interest in optical sound track systems, especially since the introduction of stereo systems, has resulted in renewed consideration of noise reduction techniques applied to the format to help overcome much of the inherently poor signal/noise performance well known in this type of system.

Noise reduction methods are known utilising complementary (compression on recording - expansion on playback) techniques and several systems are already in use, typically systems developed by modification of systems previously developed for use in other mediums, notably magnetic sound recording on tape of both audio and video signals.

This invention is primarily concerned with a noise reduction method and arrangement for use on playback of optical soundtracks in cinemas, and as such aims to take into consideration various aspects that are special to such an environment. Moreover, for this reason, the method and arrangement of this invention will not always be suitable for use in other environments.

According to one aspect of the invention, there is provided a method of noise reduction in optical soundtrack systems according to which the playback signal is first compressed and then expanded, in one case non-linearly and in the other case linearly, in a manner such that signal components of high level above a given threshold are maintained substantially unchanged whilst signal components of progressively lower level below said threshold are subject to an overall increasing expansion.

According to another aspect of the invention, there is provided a non-complementary noise reduction arrangement for handling the playback signal from an optical soundtrack, comprising a signal compressor followed by a signal expander, one of non-linear characteristic and the other of linear characteristic and which maintains substantially unchanged high level signal components above a given threshold and gives increasing expansion of progressively lower level signal components below said threshold.

0152284

-3-

In practice, the signal is non-linearly compressed and linearly expanded. The given threshold is preferably selected to be about -30 dB (reference: 0.775v - OdB), whilst, at a level below about -60 dB, low level signal components are effectively subject to linear expansion only. In this way, the system can be applied with use of increasing noise gate characteristics at progressively lower level signal components.

Control signal time constants are a necessary feature of the proposed method and arrangement, and these are preferably kept very small (a few millisecs.), with the use of control signal time constants during expansion similar to the control signal time constants employed during compression.

By means of suitable pass filters, the compression and expansion steps are preferably applied in each of a plurality of frequency band channels into which the playback signal is separated. Further, when applied to a stereo system, similar expansion and compression steps are employed in each of the left-hand and right-hand channels.

As made clear hereinbefore, the method and arrangement of this invention is non-complementary (playback only) and is primarily of interest in playback of an optical soundtrack on a motion picture recording, i.e. playback in a cinema. Such soundtracks are often encoded using known noise reduction techniques which result in an initial playback signal which is effectively compressed, with some loss of dynamic range. Without being matched to any such conventional encoding technique, the method and arrangement of this invention may be utilised to restore some of the dynamic range which has been lost during encoding.

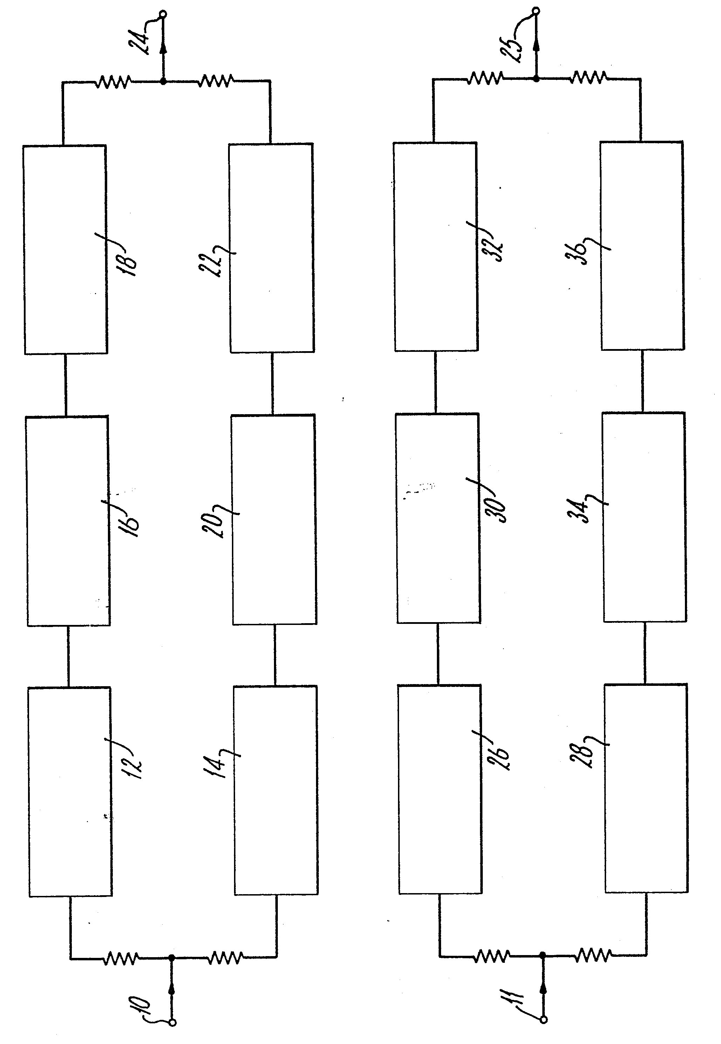

The accompanying drawing examplifies the non-complementary noise reduction arrangement of this invention, and wherein the single figure shows the arrangement in block diagram form.

Essentially the illustrated arrangement provides a non-linear compression of the playback signal, followed by a linear expansion of the signal immediately afterwards. In addition, a high pass filter and a complementary low pass filter split the signal into two paths, to reduce noise modulation effects, particularly noticeable with low frequency signals.

The principle of the described arrangement is to reduce, effectively by "masking", any inherent noise on the optical soundtrack, together with any noise that may be introduced by amplification of the signal before introduction into the noise reduction arrangement.

In detail, the left-hand channel signal input at 10 is fed simultaneously to the low pass filter 12 and the high pass filter 14. These two filters are complementary, with a cut-off frequency of 1.75 KHz, and a slope of 18 dB/oct. The right-hand signal is similarly dealt with by filters 26 and 28.

Considering the low pass filter path through 12 (the high pass path is similar), the signal is first fed to the non-linear compressor 16. Any signal above approx. -30 dB (ref: 0.775v OdB) is compressed 2:1, but below this level the compression characteristic is modified so that the amount of compression applied is reduced on low level signals, to the extent that signals below approximately -60 dB may be considered to pass through the compressor circuitry unaffected.

The output of the non-linear compressor 16 is then fed to a linear expander 18. This complementary process will restore the dynamic range lost in the 2:1 compression of high level signals, by expanding these signals by 2:1. At low levels the signal is also expanded 2:1, but as the compression of these signals has been progressively less, as described above, the net effect is variable low level expansion, tending towards noise gate characteristics at extremely low levels. This, in effect, means that, with no signal present, the expander 18 acts as a noise gate, preventing any noise either from the optical soundtrack itself or from pre-amplifiers preceding the filter 12, from passing to any subsequent signal processing circuitry following the expander 18.

The alternative path via the high pass filter 14 is via non-linear compressor 20 and linear expander 22, and similar signal treatment is applied.

The left-hand signal is output at 24 after recombining the processed signals from the low pass and high pass paths.

The right-hand signal input at 11, split through low pass filter 26 and high pass filter 28, is also similarly handled in low pass path (non-linear compressor 30 and linear expander 32) and high pass path (non-linear compressor 34 and linear expander 36) and after recombining of the signals from the low pass and high pass paths is output at 25.

An additional feature is that the control signal time constants (necessary in any such system) are kept small, in the order of a few milliseconds, without fear of significant distortion, as any distortion introduced in a compressor 16, 20, 30 or 34 will be cancelled out by the corresponding expander 18, 22, 32 or 36, provided that the time constants are similar.

As the system is non-complementary (i.e. used on playback only), it is necessary to consider its effects on playback of various types of optically recorded soundtrack.

On normal mono soundtracks the net result of using the system will be to increase the effective dynamic range of the recorded soundtrack. Although this will modify the characteristics to some extent, this apparent disadvantage is more than compensated for by the reduction of apparent noise at low levels.

On stereo soundtracks the noise problem is inherently increased by the fact that a smaller area is available on each track for the solar cell to see, and as a result lower output levels are normally to be expected. Noise reduction is thus even more important in this application.

In addition, many soundtracks recorded in stereo are encoded utilising one or other of the known noise reduction systems and this invariably means that a "compressed" signal is presented at 10 and 11. The low level expansion characteristics of the arrangement of this invention tend to restore some of the dynamic range lost in these various encoding processes, even though no aim is made to match any specific characteristic imparted on encoding.

The arrangement of the invention is intended, in the first place, for cinema use, and the minor variations in perceived dynamic range as a result of various differently encoded playback signals being presented to it are more than compensated for by the effectiveness of the noise reduction apparent, particularly at a very low signal level in the large auditoria (i.e. cinema) environment.  The same balance of advantage will not, however, be applicable in all other environments for which the noise reduction method and arrangement of this invention may be considered.

Claims

1.     A method of noise reduction in optical soundtrack
systems according to which the playback signal is first
compressed and then expanded, in one case non-linearly
and in the other case linearly, in a manner such that
signal components of high level above a given threshold
are maintained substantially unchanged whilst signal
components of progressively lower level below said
threshold are subject to an overall increasing expansion.

2.     A method according to claim 1, according to which
the signal is non-linearly compressed and linearly
expanded.

3.     A method according to claim 1 or claim 2, according
to which the given threshold is selected to be about
-30 dB.

4.     A method according to claim 3 when appendant to
claim 2, according to which, at a level below about
-60 dB, low level signal components are effectively subject
to linear expansion only.

5.     A method according to claim 4, applied with use of
increasing noise gate characteristics at progressively
lower level signal components.

6.     A method according to any of claims 1 to 5, applied
with the use of control signal time constants during expansion similar to the control signal time constants employed during compression.

7.     A method according to any of claims 1 to 6, according to which the compression and expansion steps are applied in each of a plurality of frequency band channels into which the playback signal is separated.

8.     A method according to any of claims 1 to 7, applied to a stereo playback system, with similar compression and expansion steps in each of the left and right channels.

9.     A method according to any of claims 1 to 8, applied to playback of an optical soundtrack on motion picture recordings.

10.     A method according to any of claims 1 to 9, applied to a signal which has been encoded using a noise reduction technique which results in initial presentation of a compressed signal on playback.

11.     A non-complementary noise reduction arrangement for handling the playback signal from an optical soundtrack, comprising a signal compressor followed by a signal expander, one of non-linear characteristic and the other of linear characteristic and which maintains substantially unchanged high level signal components above a given threshold and gives increasing expansion of progressively lower level signal components below said threshold.

12. An arrangement according to claim 11, having the said threshold set at about -30 dB.

13. An arrangement according to claim 11 or claim 12, having a non-linear signal compressor followed by a linear signal expander.

14. An arrangement according to any of claims 11 to 13, including a plurality of compression/expansion channels of differing pass bands into which the initially presented playback is separated by means of low and high pass filters.

15. An arrangement according to claim 14, including complementary low and high pass filters for two pass band channels.

16. An arrangement according to claim 15, wherein the low and high pass filters have a common cut-off frequency, one high and one low, of the order of 1.75 KHz.

17. An arrangement according to any of claims 11 to 16, for playback of a stereo optical soundtrack, and including a similar compressor and expander in each of the left-hand and right-hand channels.

18. An arrangement according to any of claims 11 to 17, wherein the time constants of the expander are similar to the time constants of the compressor.

19. An arrangement according to claim 18, wherein said time constants are of the order of a few hundred millisecs.

20. An arrangement according to any of claims 11 to 19, having noise gate characteristics at signal levels below about -60 dB.

21. An arrangement according to any of claims 11 to 20, when employed in a playback system for a motion picture recording.

22. A method of noise reduction on playback of an optical soundtrack substantially as hereinbefore described.

23. An arrangement for noise reduction in playback of an optical soundtrack, substantially as hereinbefore described with reference to the accompanying drawing.